(19) Europäisches Patentamt
European Patent Office
Office européen des brevets

(11) **EP 4 310 714 A1**

(12) **EUROPEAN PATENT APPLICATION**
published in accordance with Art. 153(4) EPC

(43) Date of publication:
**24.01.2024 Bulletin 2024/04**

(21) Application number: **22770966.4**

(22) Date of filing: **14.02.2022**

(51) International Patent Classification (IPC):
**G06F 30/10** (2020.01)     **G06F 30/27** (2020.01)

(52) Cooperative Patent Classification (CPC):
**G06F 30/10; G06F 30/27**

(86) International application number:
**PCT/JP2022/005624**

(87) International publication number:
**WO 2022/196207 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.03.2021 JP 2021044486**

(71) Applicants:
• **NEC Corporation
108-8001 Tokyo (JP)**
• **Tohoku University
Sendai-shi, Miyagi 980-8577 (JP)**

(72) Inventors:
• **KUWAMORI Naoki
Tokyo 108-8001 (JP)**

• **MUSA Akihiro
Tokyo 108-8001 (JP)**
• **TAKIGAWA Yohei
Tokyo 108-8001 (JP)**
• **KAZAMA Yuka
Tokyo 108-8001 (JP)**
• **SATOU Yoshihiko
Tokyo 136-8627 (JP)**
• **KOBAYASHI Hiroaki
Sendai-shi, Miyagi 980-8577 (JP)**
• **KIKUGAWA Gota
Sendai-shi, Miyagi 980-8577 (JP)**
• **OKABE Tomonaga
Sendai-shi, Miyagi 980-8577 (JP)**
• **KOMATSU Kazuhiko
Sendai-shi, Miyagi 980-8577 (JP)**

(74) Representative: **Betten & Resch
Patent- und Rechtsanwälte PartGmbB
Maximiliansplatz 14
80333 München (DE)**

(54) **MAP IMAGE GENERATION DEVICE, CONTROL METHOD, AND NON-TRANSITORY COMPUTER-READABLE MEDIUM**

(57)     A map image generation apparatus (2000) acquires material specification information (10) representing a material specification of a material (60) and physical property information (20) representing a physical property of a product (70). The map image generation apparatus (2000) generates a self-organizing map (30) by using the physical property information (20). A position in a map space, and a physical property vector indicating, for each of a plurality of types of physical properties of the product (70), a value related to a physical property quantity of the physical property are assigned to each of nodes on the self-organizing map (30). The map image generation apparatus (2000) assigns, by using the material specification information (10), a specification vector indicating a value related to the material specification to each of the nodes on the self-organizing map (30). The map image generation apparatus (2000) generates a map image (40) based on an assignment of the specification vectors to the respective nodes. On the map image (40), the nodes are clustered or colored based on the specification vectors.

EP 4 310 714 A1

60

MATERIAL → GENERATION PROCESS IN TARGET PROCESS → PRODUCT  70

MATERIAL SPECIFICATION INFORMATION  10

PHYSICAL PROPERTY INFORMATION  20

10                          20

MATERIAL SPECIFICATION INFORMATION     PHYSICAL PROPERTY INFORMATION

2000

MAP IMAGE GENERATION APPARATUS

GENERATE SELF-ORGANIZING MAP 30 SHOWING DISTRIBUTION OF PHYSICAL PROPERTIES OF PRODUCT 70 BY USING PHYSICAL PROPERTY INFORMATION 20

SELF-ORGANIZING MAP  30

GENERATE MAP IMAGE 40 REPRESENTING RELATIONSHIP BETWEEN DISTRIBUTION OF MATERIAL SPECIFICATIONS AND DISTRIBUTION OF PHYSICAL PROPERTIES OF PRODUCT 70 BY USING MATERIAL SPECIFICATION INFORMATION 10 AND SELF-ORGANIZING MAP 30

MAP IMAGE  40

Fig. 1

## Description

### Technical Field

The present disclosure relates to a technology for providing information related to product development.

### Background Art

In product development, it is useful to understand a relationship between a material and a product. Therefore, a system for helping a user or the like understand a relationship between a material and a product has been developed. For example, Patent Literature 1 discloses a system for helping a user or the like understand a causal relationship between design values of a tire and physical property values thereof by using a self-organizing map.

### Citation List

### Patent Literature

Patent Literature 1: Japanese Unexamined Patent Application Publication No. 2016-148988

### Summary of Invention

### Technical Problem

In Patent Literature 1, the self-organizing map is used to determine which one of a plurality of design variables of the tire is an important factor. Therefore, it is not assumed that the self-organizing map is used for any purpose other than the above-described purpose. In view of the above-described problem, an object of the present disclosure is to provide a novel technique for providing information useful for product development.

### Solution to Problem

A map image generation apparatus according to the present disclosure includes: acquisition unit for acquiring, for each of a plurality of patterns of a material that can be used in a target process, material specification information representing a material specification of the material and physical property information indicating a physical property quantity for each of a plurality of physical properties of a product that can be generated in the target process by using the material; self-organizing map generation unit for generating, by using the physical property information, a self-organizing map on which each node is assigned a position in a map space and a physical property vector indicating a value related to a physical property quantity for each of a plurality of types of the physical properties of the product; and map image generation unit for generating a map image showing each of the nodes arranged in the map space.

The map image generation unit performs: assigning each of the nodes a specification vector indicating values related to the material specification by using the material specification information; and performing clustering, coloring, or both for each of the nodes in the map image based on an assignment of the specification vectors to the nodes.

A control method according to the present disclosure is performed by a computer. The control method includes: an acquisition step of acquiring, for each of a plurality of patterns of a material that can be used in a target process, material specification information representing a material specification of the material and physical property information indicating a physical property quantity for each of a plurality of physical properties of a product that can be generated in the target process by using the material; a self-organizing map generation step of generating, by using the physical property information, a self-organizing map on which each node is assigned a position in a map space and a physical property vector indicating a value related to a physical property quantity for each of a plurality of types of the physical properties of the product; and a map image generation step of generating a map image showing each of the nodes arranged in the map space.

In the map image generation step: assigning each of the nodes a specification vector indicating values related to the material specification by using the material specification information; and performing clustering, coloring or both for each of the nodes in the map image based on an assignment of the specification vectors to the nodes.

A non-transitory computer readable medium according to the present disclosure stores a program for causing a computer to perform a control method according to the present disclosure.

### Advantageous Effects of Invention

According to the present disclosure, a new technology for providing information useful for product development is provided.

### Brief Description of Drawings

Fig. 1 shows an example of an overview of operations performed by a map image generation apparatus according to a first example embodiment;
Fig. 2 is a block diagram showing an example of a functional configuration of the map image generation apparatus according to the first example embodiment;
Fig. 3 is a block diagram showing an example of a hardware configuration of a computer that implements a map image generation apparatus;
Fig. 4 is a flowchart showing an example of a flow of processes performed by the map image generation apparatus according to the first example embodiment;

Fig. 5 shows an example of material specification information in the form of a table;

Fig. 6 shows an example of physical property information in the form of a table;

Fig. 7 shows an example of a structure of a self-organizing map on which a specification vector is assigned to each of nodes in the form of a table;

Fig. 8 shows an example of a map image in which nodes are clustered;

Fig. 9 is a flowchart showing an example of a flow of a process for assigning a color to a node;

Fig. 10 shows an example of a map image that is colored based on specification vectors;

Fig. 11 shows an example of a map image including a target indication; and

Fig. 12 shows an example of a case where the material specification is indicated by a target indication 42.

**Example Embodiment**

An example embodiment according to the present disclosure will be described hereinafter in detail with reference to the drawings. Further, components corresponding to or the same as each other are assigned the same or corresponding numerical numbers (or symbols) throughout the drawings, and redundant descriptions thereof are omitted as appropriate. Further, unless otherwise described, predefined information such as predetermined values and thresholds are stored in advance in a storage device or the like accessible from an apparatus that uses these values.

[First Example Embodiment]

<Overview>

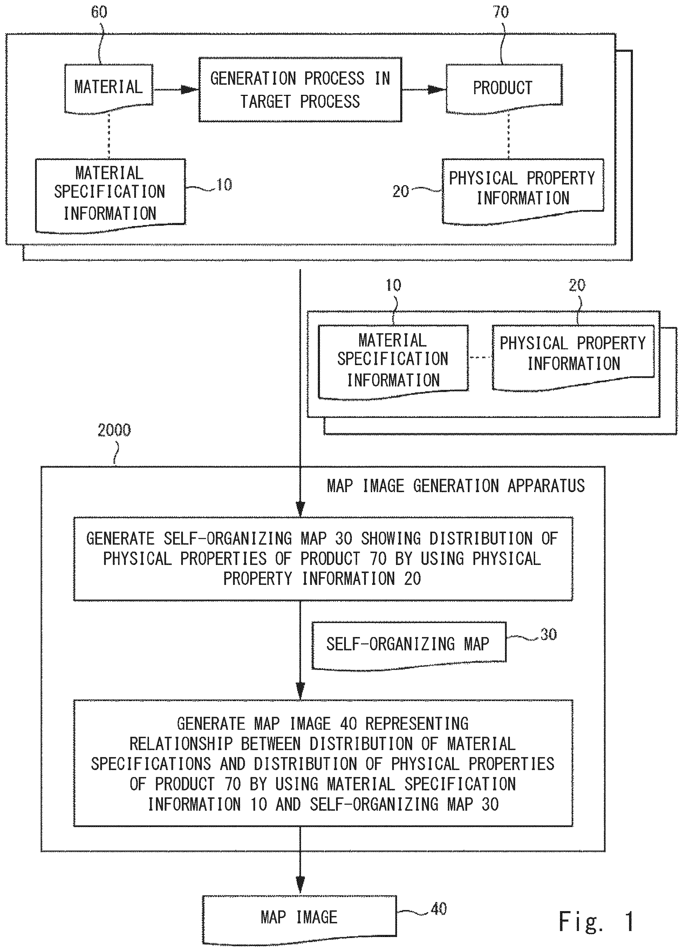

Fig. 1 shows an example of an overview of operations performed by a map image generation apparatus 2000 according to a first example embodiment. Note that Fig. 1 is a diagram merely for facilitating the understanding of the overview of the map image generation apparatus 2000, and the operations performed by the map image generation apparatus 2000 are not limited to those shown in Fig. 1.

The map image generation apparatus 2000 generates a map image 40 for a product 70 that can be generated in a specific process (hereinafter also referred to as a target process) in product development. The map image 40 is an image representing a relationship between a distribution of material specifications of a material that has been used to generate the product 70 and a distribution of physical properties of the product 70.

The product 70 is a product that is predicted to be generated by processing a material 60 in a generation process of the target process, or an actually generated product. The material 60 is a material used to generate the product 70. Various patterns of a materials 60 can be used in the target process. The physical properties of the product 70 can vary depending on the used material 60.

A pattern of the material 60 is specified by its material specification. In other words, materials 60 having material specifications different from each other are handled as the material 60 of different patterns from each other. On the other hand, materials 60 having the same material specification as each other are handled as the material 60 of the same patterns as each other.

A material specification is represented by, for example, a type of the material, types of substances constituting the material, a blending ratio of each substance, and a type of processing performed to generate the material. Examples of types of materials include carbon fiber reinforced plastics and stainless steel. For example, assume that the material 60 is a carbon fiber reinforced plastic. In this case, the material specification of the material 60 include the type of each of one or more carbon fibers that constitute the material 60 (such as polyacrylonitrile fibers and cellulose carbonized fibers), the type of each of one or more resins that constitute the material 60 (such as epoxy and polyether tephthalate), and a blending ratio of those materials. Further, the material specification may also include a type of fiber directional polymerization method, a type of crimping method, or a resin composition.

To generate the above-described map image 40, the map image generation apparatus 2000 acquires, for each of a plurality of patterns of the material 60 (in other words, for materials 60 specified by respective material specifications of various patterns), material specification information 10 representing the material specification of the material 60 and physical property information 20 indicating the physical properties of a product 70 that can be generated in the target process by using the material 60. The physical property information 20 indicates a physical property quantity for each of a plurality of types of physical properties of the product 70. Examples of types of physical properties include incombustibility, heat resistance, elastic modulus, or tenacity.

The map image generation apparatus 2000 generates a self-organizing map 30 showing a distribution of physical properties of the product 70 by using the physical property information 20. The self-organizing map 30 has a plurality of nodes arranged in an m-dimensional map space. Note that m is set to two or three so that the map image 40 can be generated from the self-organizing map 30. For example, nodes can be represented by cells of a checkered pattern or grid points of a grid pattern.

Each of the nodes on the self-organizing map 30 is assigned multi-dimensional data (hereinafter also referred to as a physical property vector) that represents the magnitude of the physical property quantity for each of a plurality of types of the physical properties. For example, assume that four types of physical properties including incombustibility, heat resistance, elastic modulus, and tenacity are used. In this case, the physical property vector is a four-dimensional data that represents the magnitude of the physical property quantity for each of these four types of physical properties. In the following description, the number of dimensions of the physical property vector is denoted by n. Note that n is larger than m (n>m). That is, on the self-organizing map 30, the space of the physical property vector is a high-dimensional space while the map space is a low-dimensional space.

The physical property information 20 indicates physical property quantities of at least n types of physical properties. The map image generation apparatus 2000 performs training for the self-organizing map 30 by using physical property quantities of the n types of physical properties indicated by the physical property information 20 and determines a physical property vector to be assigned to each of the nodes, thereby generating a self-organizing map 30.

Further, the map image generation apparatus 2000 assigns each of a plurality of pieces of material specification information 10 to one of the nodes on the self-organizing map 30. Specifically, the map image generation apparatus 2000 assigns multi-dimensional data (hereinafter also referred to as a specification vector) representing the value of each of a plurality of types of parameters (hereinafter also referred to as specification parameters) indicated by the material specification information 10 to a node. Note that a specification vector obtained from material specification information 10 is assigned to a node having a physical property vector that is most similar to the n-dimensional data obtained from the physical property information 20 corresponding to that material specification information 10 (the physical property information 20 representing the physical properties of a product 70 that is generated by using a material 60 specified by that material specification information 10). In this way, each pair of the material specification information 10 and the physical property information 20 acquired by the map image generation apparatus 2000 is assigned to one of the nodes on the self-organizing map 30. That is, a material specification is assigned to physical properties of a product 70 on the self-organizing map 30.

The map image generation apparatus 2000 generates a map image 40 based on associations between nodes and specification vectors on the self-organizing map 30. The map image 40 shows a position of each node in the m-dimensional space. Further, each node in the map image 40 is 1) clustered based on the association of the node and the specification vector, or 2) colored based on the association of the node and the specification vector.

<Example of Advantageous Effect>

In product development, in order to generate a product having desired physical properties, there are cases where a material with which such a product can be generated is searched for. One way to carry out such a search is to simulate the generation of a product or experimentally generate a product while widely changing its material specification. Further, it is also conceivable to adopt a technique in which a reverse analysis for predicting a material specification from desired physical properties by using a relationship between a material specification and physical properties of products (a relationship between material specification information 10 and physical property information 20 in the present disclosure) that is accumulated through such simulations or experimental generation of products.

In this regard, the map image generation apparatus 2000 generates a self-organizing map 30 by using a plurality of physical property vectors obtained from a plurality of respective pieces of physical property information 20, and assigns a specification vector representing a material specification to each node on the self-organizing map 30. Then, the map image generation apparatus 2000 performs one or both of clustering and coloring of nodes based on the assignments of material specifications to the respective nodes. As a result, it is possible to recognize a distribution of material specifications on the self-organizing map that shows a distribution of physical properties. That is, it is possible to recognize a relationship between the distribution of physical properties and the distribution of material specifications by using the map image 40. Therefore, the map image 40 can be used for the above-described reverse analysis.

For example, assume that in the nodes shown in the map image 40, there is a node representing physical properties close to physical properties desired by the user of the map image generation apparatus 2000. In this case, it can be considered that there is a high probability that it is possible to generate a product 70 having the desired physical properties by using a material 60 specified by the material specification represented by that node or a material 60 specified by the material specification close to the aforementioned material specification.

In this regard, in the map image 40, clustering or coloring based on the specification vectors are further performed for the self-organizing map 30 generated based on the physical property vectors. Therefore, it can be considered that the physical properties and the material specification are similar to each other in the nodes that are classified into the same cluster as each other or assigned colors similar to each other. Therefore, for example, the user of the map image generation apparatus 2000 uses a node representing physical properties close to desired physical properties as a starting point, and searches for a material around the material specification represented by this starting-point node (the material specification represented by each node included in the same cluster as the aforementioned node or by each node having a color similar to that of the aforementioned node). In this way, it is possible to effectively conduct a search for a material with which a product 70 having desired physical properties can be generated (i.e., in a shorter time and at a lower cost).

The map image generation apparatus 2000 according to this example embodiment will be described hereinafter in a more detailed manner.

<Example of Functional Configuration>

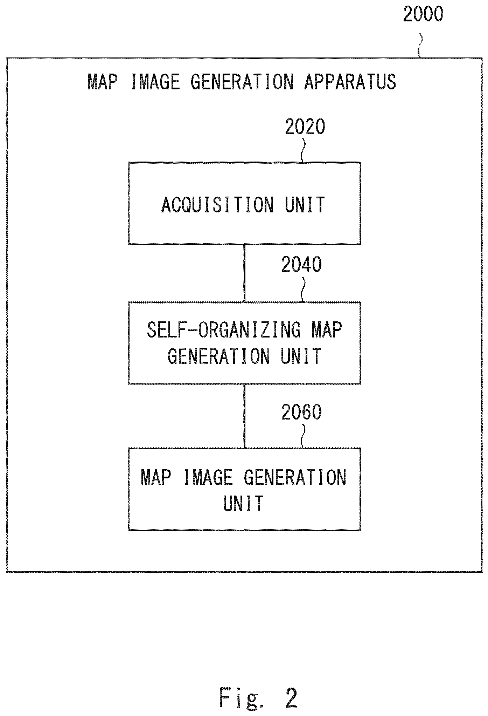

Fig. 2 is a block diagram showing an example of a functional configuration of the map image generation apparatus 2000 according to the first example embodiment. The map image generation apparatus 2000 includes an acquisition unit 2020, a self-organizing map generation unit 2040, and a map image generation unit 2060. The acquisition unit 2020 acquires material specification information 10 and physical property information 20 for each of a plurality of patterns of the materials 60. The self-organizing map generation unit 2040 generates a self-organizing map 30 by using the physical property information 20. The map image generation unit 2060 assigns, for each of nodes on the self-organizing map 30, a specification vector obtained from a respective one of pieces of material specification information 10. Further, the map image generation unit 2060 generates a map image 40 showing the arrangement of the nodes in the map space of the self-organizing map 30. On the map image 40, nodes are clustered or colored based on the specification vectors assigned to them.

<Example of Hardware Configuration>

Each of functional components of the map image generation apparatus 2000 can be implemented by hardware that implements the functional component (e.g., a hardwired electronic circuit or the like) or by a combination of hardware and software (e.g., a combination of an electronic circuit and a program for controlling it or the like). A case where each of the functional components of the map image generation apparatus 2000 is implemented by a combination of hardware and software will be further described hereinafter.

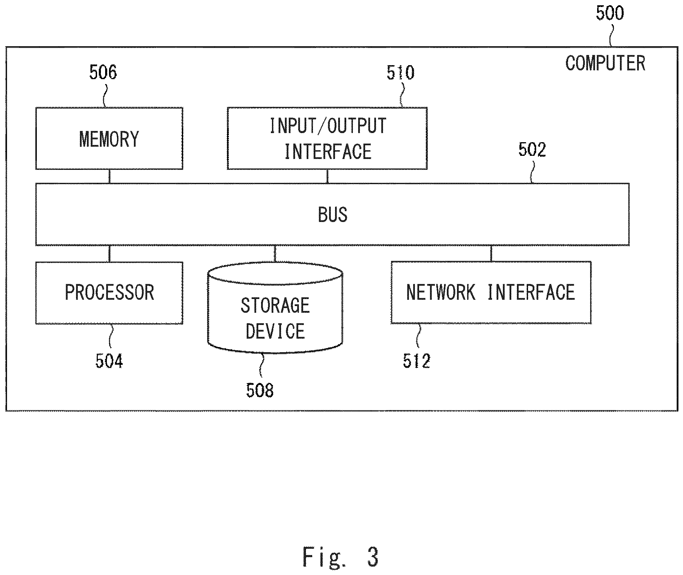

Fig. 3 is a block diagram showing an example of a hardware configuration of a computer 500 that implements the map image generation apparatus 2000. The computer 500 is an arbitrary computer. For example, the computer 500 is a stationary computer such as a server machine or a PC (Personal Computer). Alternatively, for example, the computer 500 is a mobile computer such as a smartphone or a tablet-type terminal. The computer 500 may be a special-purpose computer designed to realize the map image generation apparatus 2000, or may be a general-purpose computer.

For example, each of functions of the map image generation apparatus 2000 is implemented by the computer 500 by installing a predetermined application in the computer 500. The aforementioned application is composed of a program for implementing each of the functional components of the map image generation apparatus 2000. Note that how to acquire the aforementioned program is arbitrarily determined. For example, the program can be acquired from a storage medium (such as a DVD or a USB memory) in which the program is stored. Alternatively, the program can be acquired, for example, by downloading the program from a server apparatus that manages a storage device in which the program is stored.

The computer 500 includes a bus 502, a processor 504, a memory 506, a storage device 508, an input/output interface 510, and a network interface 512. The bus 502 is a data transmission path through which the processor 504, the memory 506, the storage device 508, the input/output interface 510, and the network interface 512 transmit and receive data to and from each other. However, the method for connecting the processor 504 and the like to each other is not limited to connections through buses.

The processor 504 is any of various types of processors such as a CPU (Central Processing Unit), a GPU (Graphics Processing Unit), or an FPGA (Field-Programmable Gate Array). The memory 506 is a primary storage device implemented by using a RAM (Random Access Memory) or the like. The storage device 508 is a secondary storage device implemented by using a hard disk drive, an SSD (Solid State Drive), a memory card, or a ROM (Read Only Memory).

The input/output interface 510 is an interface for connecting the computer 500 with an input/output device(s). For example, an input device such as a keyboard and an output device such as a display device are connected to the input/output interface 510.

The network interface 512 is an interface for connecting the computer 500 to a network. The network may be a LAN (Local Area Network) or a WAN (Wide Area Network).

In the storage device 508, programs for implementing respective functional components of the map image generation apparatus 2000 (programs for implementing the above-described applications) are stored. The processor 504 implements each of functional components of the map image generation apparatus 2000 by loading the aforementioned program onto the memory 506 and executing the loaded program.

The map image generation apparatus 2000 may be implemented by one computer 500 or by a plurality of computers 500. In the latter case, the configurations of the computers 500 do not need to be identical to each other, but can be different from each other.

<Flow of Processes>

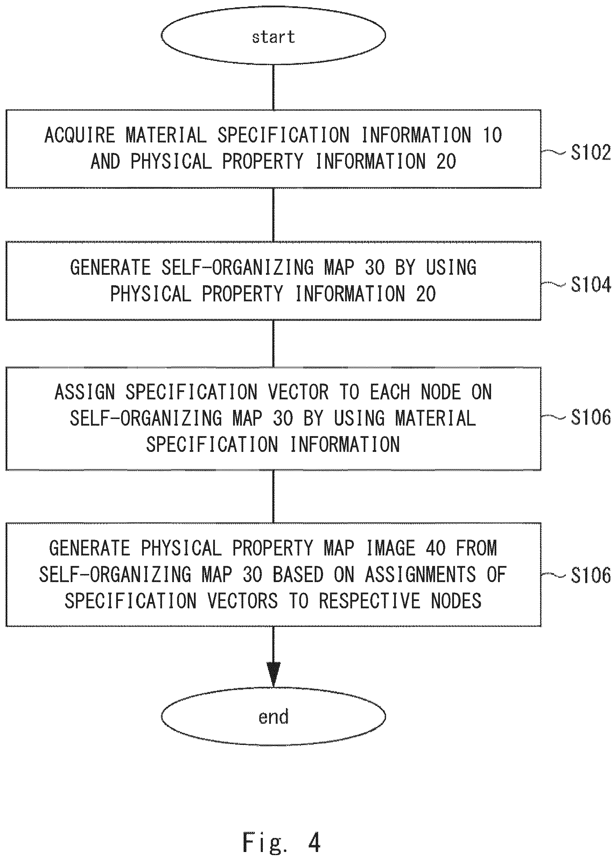

Fig. 4 is a flowchart showing an example of a flow of processes performed by the map image generation apparatus 2000 according to the first example embodiment. The acquisition unit 2020 acquires material specification information 10 and physical property information 20 for each of a plurality of materials 60 that can be used in the target process (S102). The self-organizing map generation unit 2040 generates a self-organizing map 30 by using the physical property information 20 (S104). The map image generation unit 2060 assigns each of a plurality of specification vectors obtained from a respective one of pieces of material specification information 10 to one of the nodes on the self-organizing map 30 (S106). The map image generation unit 2060 generates a map image 40 from the self-organizing map 30 based on the assignments of specification vectors to the nodes (S108).

<Acquisition of Material Specification Information 10 and Physical Property Information 20: S102>

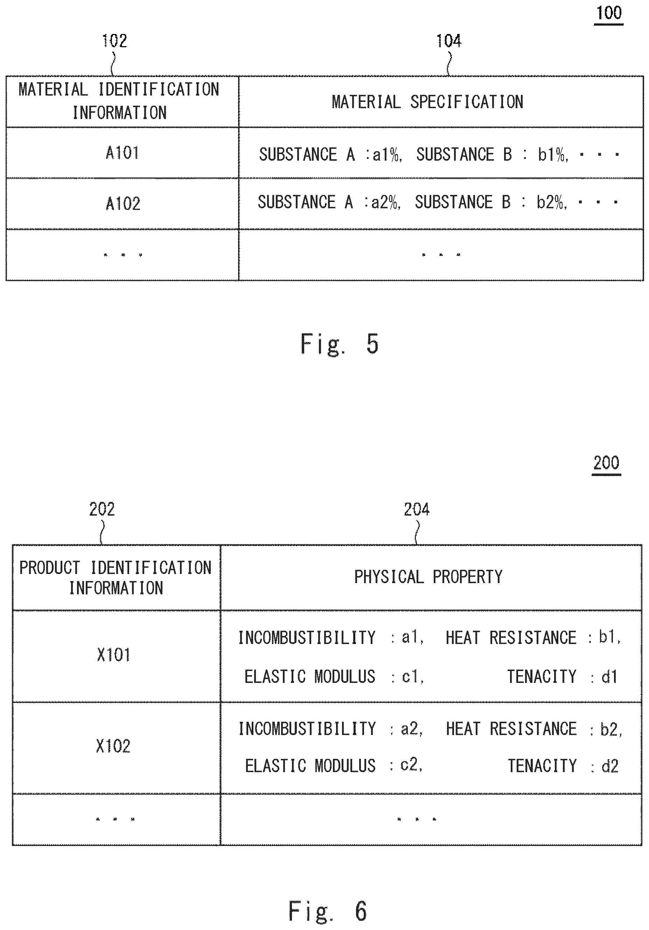

For each of a plurality of patterns of the material 60 that can be used in the target process, the acquisition unit 2020 acquires material specification information 10 representing the material specification of that material 60 and physical property information 20 for a product 70 that can be generated by using the material 60 (S102). Fig. 5 shows an example of the material specification information 10 in the form of a table. Table 100 in Fig. 5 has a column named Material Identification Information 102 and a column named Material Specification 104. The material identification information 102 indicates identification information assigned to a material 60. The material specification 104 indicates a specification of the material 60.

In Fig. 5, the material specification information 10 is represented by one record in Table 100. That is, the material specification information 10 associates the identification information of a material 60 and the material specification of the material 60 having that identification information.

Fig. 6 shows an example of the physical property information 20 in the form of a table. Table 200 in Fig. 6 has a column named Product Identification Information 202 and a column named Physical Property 204. The product identification information 202 indicates identification information of a product 70. The physical property 204 indicates physical properties of the product 70. In Table 200, the physical property of the product 70 is represented by indicating an association "Label indicating Type of Physical Property: Physical Property Quantity of the Physical Property" for each physical property.

In Fig. 6, the physical property information 20 is represented by one record in Table 200. That is, the physical property information 20 associates the identification information of a product 70 with physical properties of the product 70 having that identification information.

The acquisition unit 2020 acquires a plurality of pairs of the material specification information 10 and the physical property information 20. There are various methods by which the acquisition unit 2020 acquires the pairs of the material specification information 10 and the physical property information 20. For example, pairs of the material specification information 10 and the physical property information 20 are stored in advance in an arbitrary storage device accessible from the map image generation apparatus 2000. The acquisition unit 2020 acquires a pair of the material specification information 10 and the physical property information 20 by accessing this storage device. Alternative, for example, the acquisition unit 2020 may acquire a pair of the material specification information 10 and the physical property information 20 by receiving an input from a user for entering the pair of the material specification information 10 and the physical property information 20. Alternatively, for example, the acquisition unit 2020 may acquire a pair of the material specification information 10 and the physical property information 20 by receiving the pair of the material specification information 10 and the physical property information 20 transmitted from another apparatus.

Note that there are various methods for generating a pair of the material specification information 10 and the physical property information 20. For example, a pair of the material specification information 10 and the physical property information 20 is generated by performing a simulation of the generation of a product 70. Specifically, by performing a simulation given an input of a specific material specification, physical property information 20 that indicates a predicted physical property quantity of each physical property of a product 70 is generated. Then, a pair of the generated physical property information 20 and the material specification information 10 indicating the material specification given as the input is obtained. Note that an existing technique can be used for the above-described technique in which a material specification is acquired as an input and a simulation for outputting predicted data of physical properties of a product that is generated in a specific process using a material specified by the acquired material specification is performed.

Alternatively, for example, a pair of the material specification information 10 and the physical property information 20 can be generated by actually producing a product 70. Specifically, a product 70 is experimentally generated by using a material 60 represented by a specific material specification in the target process. Further, physical property information 20 is generated by measuring a physical property quantity of each of physical properties of the generated product 70. As a result, a pair of the generated physical property information 20 and material specification information 10 representing the utilized material 60 is obtained.

Note that a plurality of pieces of physical property information 20 acquired by the acquisition unit 2020 may include those that express data in different ways from each other. For example, it is conceivable that different labels are used for physical properties that are essentially the same as each other. Further, it is conceivable that physical property quantities of the same physical property are expressed in units different from each other. In such a case, it is preferred that the acquisition unit 2020 unifies the ways of expressing data, for example, by unifying labels or performing inter-unit conversion. It is conceivable that such a situation in which the ways of expressing data of pieces of physical property information 20 are different from each other could occur, for example, when pieces of physical property information 20 generated by using a simulation and pieces of physical property information 20 generated by actually generating a product 70 are both acquired. Note that it is preferred that the unification of ways of expressing data is also carried out for the material specification information 10 in a similar manner.

<Generation of Self-Organizing Map 30: S104>

The self-organizing map generation unit 2040 generates a self-organizing map 30 by using the physical property information 20 (S104). The self-organizing map 30 has a plurality of nodes arranged on an m-dimensional map space (m=2 or m=3). Whether two dimensions or three dimensions are employed as the number of dimensions of the map space may be determined in advance or designated by a user. Each of the nodes on the self-organizing map 30 is assigned an n-dimensional physical property vector.

The assignment of a physical property vector to each node is carried out through the training of the self-organizing map 30. The training of the self-organizing map 30 can be carried out by inputting n-dimensional training data to be used for the training into the self-organizing map 30. Note that an existing method can be used as an actual method for training the self-organizing map by using training data.

For example, the self-organizing map generation unit 2040 initializes the self-organizing map 30 by an arbitrary method. As the initialization method, for example, a method to initialize a physical property vector of each node to a random value can be adopted. The self-organizing map generation unit 2040 extracts a physical property quantity for each of the n-types of the physical properties from each of the acquired pieces of the physical property information 20 to generate n-dimensional physical property vectors. The self-organizing map generation unit 2040 performs the training of the self-organizing map 30 using each of the physical property vectors as training data, thereby generating the self-organizing map 30. As a result, a physical property vector of each node on the self-organizing map 30 becomes n-dimensional data indicating a value for each of the physical property quantities of the n types of the physical properties.

The n-dimensional data obtained from the physical property information 20 may indicate each of physical property quantities of the n types of the physical properties represented by the physical property information 20 as it is, or may indicate a value that is obtained by converting each physical property quantity with a predetermined method (e.g., normalization, standardization, or the like).

Note that the number of physical properties represented by the physical property information 20 may be greater than n. In this case, some of data represented by the physical property information 20 are used to generate the self-organizing map 30. Note that which types of the physical properties represented by the physical property information 20 are used to generate the self-organizing map 30 may be determined in advance or designated by a user.

<Assignment of Specification Vector: S106>

In order to generate a map image 40 from the self-organizing map 30, the map image generation unit 2060 assigns a specification vector to each node on the self-organizing map 30 by using the material specification information 10 (S106). Note that the specification vector obtained from the material specification information 10 may indicate values of all the parameters indicated by the material specification information 10 or values of some of all the parameters. That is, when the number of dimensions of the specification vector is represented by k, the value of k may be equal to the number of the parameters indicated by the material specification information 10 or smaller than the number of the parameters indicated by the material specification information 10.

For example, assume that the material specification information 10 indicates both parameters that have continuous values (e.g., a blending ratio of a substance) and parameters that do not have continuous values (e.g., a type of processing or the like). In this case, the specification vector is generated by the parameters having continuous values.

Note that which of the parameters indicated by the material specification information 10 are used to generate the specification vector may be determined in advance or designated by a user. Further, the specification vector may indicate the value of a parameter indicated by the material specification information 10 as it is, or may indicate a value that is obtained by converting the value of a respective parameter with a predetermined method (e.g., normalization, standardization, or the like).

In order to determine the assignment of a specification vector to each node, for example, the map image generation unit 2060 assigns each of pieces of the material specification information 10 to a respective node. The physical property information 20 corresponding to the material specification information 10 is used for the assignment of the material specification information 10 to a node. That is, the map image generation unit 2060 determines a node having a physical property vector that is most similar to a physical property vector obtained from the physical property information 20 corresponding to the material specification information 10. The map image generation unit 2060 assigns the material specification information 10 to the determined node. The map image generation unit 2060 assigns the specification vector obtained from that material specification information 10 to the node to which the material specification information 10 is assigned.

Note that as a result of the above-described process, there may be a node(s) to which no material specification information 10 is assigned. Therefore, for example, the map image generation unit 2060 obtains, by estimation, a specification vector to be assigned to a node to which no material specification information 10 has been assigned. That is, the map image generation unit 2060 estimates a distribution of specification vectors based on the specification vectors of the respective nodes to which the material specification information 10 has been assigned and the arrangement of these nodes in the map space. Then, the map image generation unit 2060 also assigns a specification vector to the node to which no material specification information 10 has been assigned by using the estimated distribution.

There are various methods for estimating a distribution of specification vectors. For example, the map image generation unit 2060 estimates a distribution of specification vectors by using an arbitrary interpolation process such as linear interpolation or spline interpolation. Alternatively, for example, the map image generation unit 2060 may estimate a distribution of specification vectors by sparse estimation. Note that when a distribution of specification vectors is estimated, the accuracy of the estimation may be improved by further applying Bayesian estimation.

Note that it is possible to increase the number of nodes to which the material specification information 10 is assigned by increasing the number of pairs of the material specification information 10 and the physical property information 20 used by the map image generation apparatus 2000 through additional searches for the materials (i.e., the simulations). As a result, it is possible to increase the number of data points obtained by actual measurement in the distribution of material specifications, thereby enabling more accurate estimation of the distribution of specification vectors. When doing so, it is preferred to use Bayesian optimization to select a material specification for which the simulation is performed. Specifically, by making a prediction using Bayesian estimation for a physical property of a product 70 generated from a material 60 having certain a material specification, it is possible to obtain a predicted value and its certainty (a prediction error) in combination. It is possible to determine a data point that should be measured next (i.e., a material specification for which a simulation or the like should be performed) by using the above-described predicted value and error. According to this method, it is possible to search for a material with which a product 70 having better physical properties can be obtained by performing a fewer number of trials.

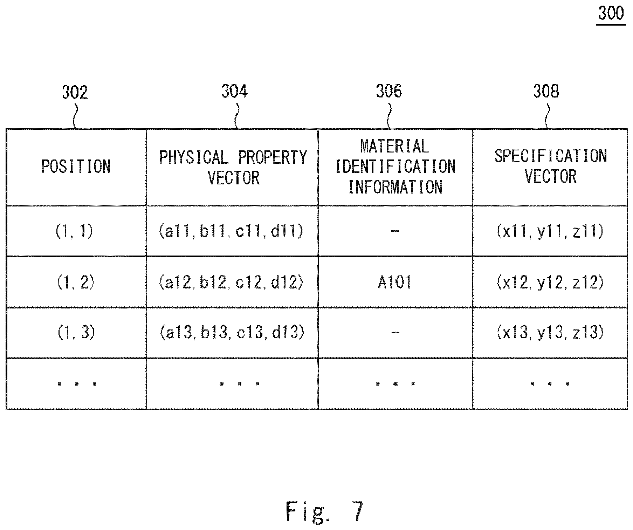

Fig. 7 shows an example of a structure of a self-organizing map 30 on which a specification vector is assigned to each node in the form of a table. Table 300 in Fig. 7 has four columns: Position 302, Physical Property Vector 304, Material Identification Information 306, and Specification Vector 308. Table 300 has one record for one node.

The position 302 indicates coordinates of a node in the m-dimensional map space. In the example shown in Fig. 7, m is two (m=2), and x-coordinate and y-coordinate are assigned to a node. The physical property vector 304 shows a n-dimensional physical property vector assigned to the node. In the example shown in Fig. 7, n is four (n=4). For a node to which material specification information 10 is assigned, the material identification information 306 shows identification information of a material 60 indicated by the material specification information 10 assigned to the node. In a record of a node to which no material specification information 10 is assigned, the material identification information 306 shows "-". The specification vector 308 shows a k-dimensional specification vector assigned to the node. In the example shown in Fig. 7, k is three (k=3).

<Generation of Map Image 40: S108>

The map image generation unit 2060 generates a map image 40 by using the specification vectors assigned to the nodes (S108). The map image 40 is an image showing the position of each node in the map space of the self-organizing map 30. Further, in the map image 40, one or both of clustering and coloring based on the specification vectors is performed for nodes. The clustering and coloring based on the specification vectors will be described hereinafter one by one.

<<Clustering based on Specification Vector>>

The map image generation unit 2060 performs clustering of nodes based on the specification vectors assigned to the respective nodes. Note that an existing technique can be used for the technique for performing clustering of nodes based on a plurality of vectors associated with the respective nodes. For example, the map image generation unit 2060 performs clustering of nodes by using a clustering algorithm such as a k-means method. Note that the number of clusters to be generated may be fixed, designated by a user, or computed as a result of the execution of a clustering algorithm.

When the clustering based on the specification vector is performed, the map image generation unit 2060 includes, into the map image 40, indications by which a plurality of generated clusters can be distinguished from each other. For example, a boundary line of each cluster may be shown in the map image 40.

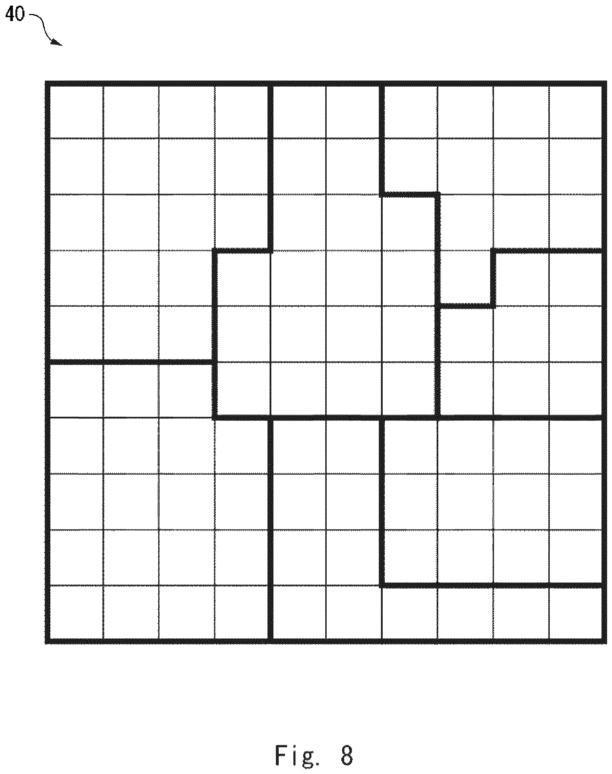

Fig. 8 shows an example of the map image 40 in which nodes are clustered. In Fig. 8, nodes are represented by cells of a two-dimensional checkered pattern.

Further, the map image 40 shown in Fig. 8 has seven clusters. The clusters are separated from each other by boundary lines that are thicker than the boundary lines of the nodes.

The indications by which clusters can be distinguished from each other are not limited to the boundary lines. For example, it is conceivable to adopt a method by which the map image generation unit 2060 assigns a unique color or pattern to each of the clusters and assigns each of the nodes included in each of the clusters the color or pattern that is assigned to the cluster in which the node is included.

<<Coloring based on Specification Vector>>

For each node, the map image generation unit 2060 performs coloring based on the specification vector of the node. For example, the map image generation unit 2060 determines, based on the value of one of the elements of the specification vector (i.e., one of the specification parameters), the magnitude of the component of each of one or more base colors (e.g., three primary colors) that constitute the color assigned to the node. In the following description, a color assigned to a node will be referred to as an assigned color. An example of a method for assigning a color to a node will be described hereinafter in detail.

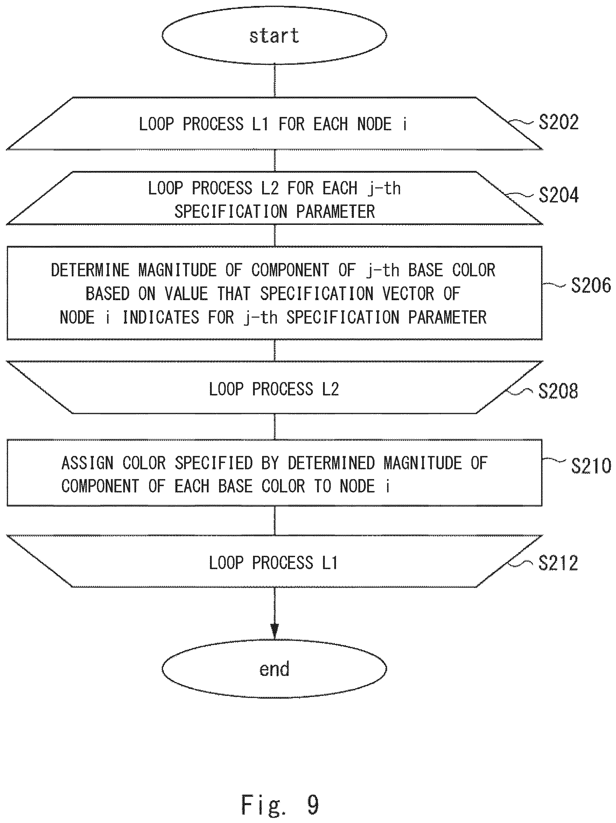

Fig. 9 is a flowchart showing an example of a flow of a process for assigning a color to a node. Steps S202 to S212 constitute a loop process L1. The loop process L1 is performed once for each of the nodes included in the self-organizing map 30. In the step S202, the map image generation unit 2060 determines whether or not the loop process L1 has been performed for all the nodes. When the loop process L1 has already been performed for all the nodes, the series of processes shown in Fig. 9 ends. On the other hand, when there is at least one node for which the loop process L1 has not been performed yet, the map image generation unit 2060 selects one of them. The node selected in the above-described step is expressed as a node i.

Steps S204 to S208 constitute a loop process L2. The loop process L2 is performed once for each type of the specification parameters used to determine the assigned color. In the step S204, the map image generation unit 2060 determines whether or not the loop process L2 has been performed for all the types of the specification parameters used to determine the assigned color. When the loop process L2 has already been performed for all the types of the specification parameters used to determine the assigned color, the process shown in Fig. 9 proceeds to a step S210. On the other hand, when there are one or more specification parameters used to determine the assigned color for which the loop process L2 has not been performed yet, the map image generation unit 2060 selects one of them. The specification parameter selected in the above-described step is expressed as a j-th specification parameter.

In the step S206, the map image generation unit 2060 determines the magnitude of the component of a j-th base color of the assigned color of the node i based on the value that the specification vector of the node i indicates for the j-th specification parameter. For example, the magnitude of the component of the j-th base color of the assigned color of the node i is computed by a conversion formula that is determined based on the numerical range of values that the specification vector indicates for the j-th specification parameter and the numerical ranges of magnitudes of the component of each base color. This conversion formula is expressed, for example, by the following Equation 1.
[Equation 1]

$$c[i,j] = f(x[i,j]) = \frac{x[i,j]}{W[j]} * C \quad (1)$$

wherein $c[i,j]$ represents the magnitude of the component of the j-th base color of the assigned color of the node i. Further, $x[i,j]$ represents a value that the specification vector of the node i indicates for the j-th specification parameter. Further, $f()$ represents the conversion formula. Further, $W[j]$ represents the magnitude of the numerical range of values that the specification vector indicates for the j-th specification parameter. Further, C represents the magnitude of the numerical range of components of each base color.

Note that in the conversion formula expressed by Equation 1, the larger the value that the specification vector indicates for the j-th specification parameter is, the larger the component of the j-th base color becomes. In other words, the magnitude of the component of the j-th base color monotonically increases according to the value that the specification vector indicates for the j-th specification parameter. However, the magnitude of the component of the j-th base color does not necessarily have to monotonically increase according to the value that the specification vector indicates for the j-th specification parameter. For example, the smaller the value that the specification vector indicates for the j-th specification parameter is, the larger the value that is set to the component of the j-th base color becomes.

The step S208 is the end of the loop process L2. Therefore, the process shown in Fig. 9 proceeds to a step S204.

The step S210 is performed after the repetition of the loop process L2 for one node i is finished. Therefore, the magnitudes of the components of all the base colors have already been determined for the assigned color of the node i before the step S210 is performed. Therefore, in the step S210, the map image generation unit 2060 assigns a color that is specified by the determined magnitudes of the components of all the base colors to the node i. For example, assume that red, green, and blue are used as the first, second, and third base colors, respectively. In this case, the assigned color of the node i is expressed as (R, G, B) = (f(x[i,1]), f(x[i,2]), f(x[i,3])).

The step S212 is the end of the loop process L1. Therefore, the process shown in Fig. 9 proceeds to a step S202.

The map image generation unit 2060 generates a map image 40 based on the assignment of the color to the node determined as described above. Specifically, the map image generation unit 2060 generates the map image 40 by showing each of the nodes arranged in the map space by the assigned color of that node.

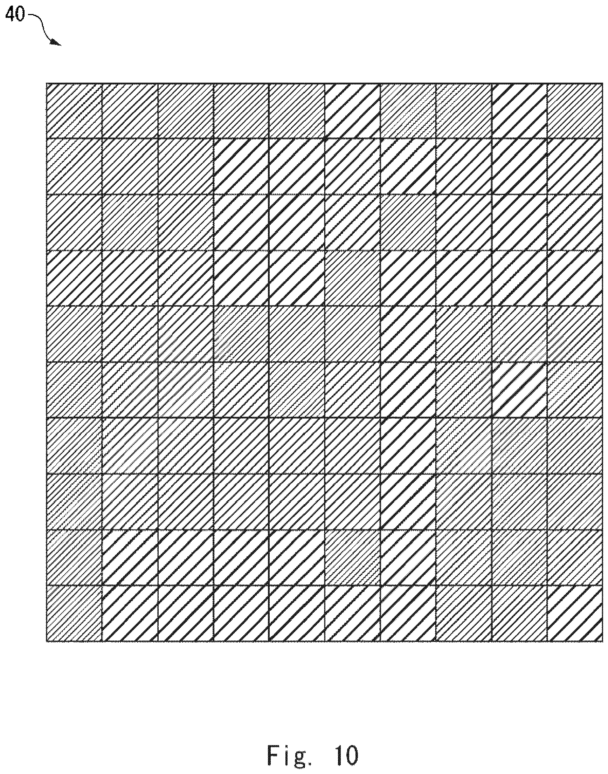

For example, assume that the arrangement of nodes is represented by using cells of a checkered pattern. In this case, the map image 40 is an image that includes a checkered pattern in which each cell is expressed by (e.g., filled with) the assigned color of the node corresponding to that cell. Fig. 10 shows an example of the map image 40 that is colored based on the specification vectors. In the map image 40 shown in Fig. 10, for each of the nodes, the color of the cell corresponding to the node is set to the assigned color of that node. Note that for the sake of illustration, differences of colors are expressed by differences of densities of diagonal lines.

The method for showing the arrangement of nodes is not limited to the method using cells. For example, the arrangement of nodes may be represented by using grid points of a grid pattern. In this case, for example, the map image 40 becomes an image of a grid pattern in which a predetermined area around each grid point (e.g., a circle having a predetermined radius centered at a grid point) is expressed by the assigned color of the node corresponding to that grid point.

<Indication by which Desired Physical Property can be Understood>

The map image generation apparatus 2000 may acquire target information, which is information representing desired physical properties for a product 70, and include, into the map image 40, an indication representing a node corresponding to the desired physical properties. Hereafter, this indication will be referred to as a target indication. If a node corresponding to the desired physical properties can be shown in the map image 40, it will be easy for the user of the map image generation apparatus 2000 to search for a material 60 with which a product 70 having the desired physical properties can be made. This feature will be described hereinafter in detail.

Firstly, the map image generation apparatus 2000 acquires target information. For example, the target information is input by the user of the map image generation apparatus 2000. Note that the acquisition of the target information may be performed before a map image 40 is generated or after a map image 40 is generated. In the latter case, for example, the map image generation apparatus 2000 acquires target information after outputting a map image 40 including no target indication, and then updates the output map image 40 so as to include the target indication.

The map image generation apparatus 2000 generates a physical property vector from the target information. The method for generating a physical property vector from target information is similar to the method for generating a physical property vector from physical property information 20.

The map image generation apparatus 2000 determines, among the nodes on the self-organizing map 30, a node having a physical property vector that is most similar to the physical property vector obtained from the target information. Then, the map image generation apparatus 2000 includes, into the map image 40, a target indication showing that this node is a node corresponding to the desired physical properties.

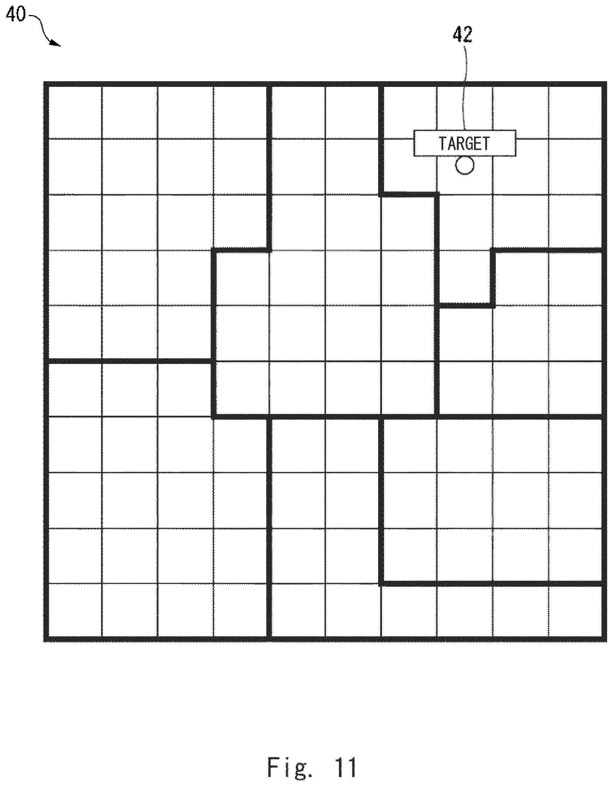

Fig. 11 shows an example of a map image 40 including a target indication. In Fig. 11, the target indication is indicated by a symbol 42.

It can be considered that the node to which the target indication 42 is attached represents physical properties closest to the desired physical properties in the distribution of physical properties represented by the self-organizing map 30. Therefore, it can be considered that a specification vector assigned to this node represents the material specification with which the probability that a product 70 having the desired physical properties can be generated is the highest in the distribution of material specifications represented by the self-organizing map 30. From this fact, by looking at the map image 40 including the target indication 42, the user of the map image generation apparatus 2000 can find the material specification with which the probability that a product 70 having the desired physical properties can be generated is the highest, based on the specification vector of the node to which the target indication 42 is attached.

For example, the user uses the material specification represented by the specification vector of the node to which the target indication 42 is attached as a starting point, and searches for a material 60 by which the product 70 having the desired physical properties can be generated. That is, the user performs a simulation or actually generates a product 70 by using the material specification represented by the specification vector of the node to which the target indication 42 is attached or by using one or more patterns of the material specifications close to the aforementioned material specification. Then, the user determines, based on the result of the simulation or the generation of the product 70, a material specification with which a product 70 having the desired physical properties can be generated. According to this method, since material specifications that should be used as the starting point of a search can be easily determined by using the map image 40, the time and the cost required for the search can be reduced as compared to the case in which no such map image 40 is used.

Note that it is preferred to determine the range of the material search (i.e., the range of material specifications close to the material specification represented by the specification vector of the node to which the target indication 42 is attached) or the order of the material searches based on the clusters or colors of nodes. For example, the user searches for a material in the cluster including the node to which the target indication 42 is attached. In the example shown in Fig. 11, the node to which the target indication 42 is attached is included in the cluster located in the upper-right corner. Therefore, the user searches for a material in this cluster. Alternatively, for example, the user performs the searches for a material in turn starting from a node having a color that is most similar to the color of the node to which the target indication 42 is attached.

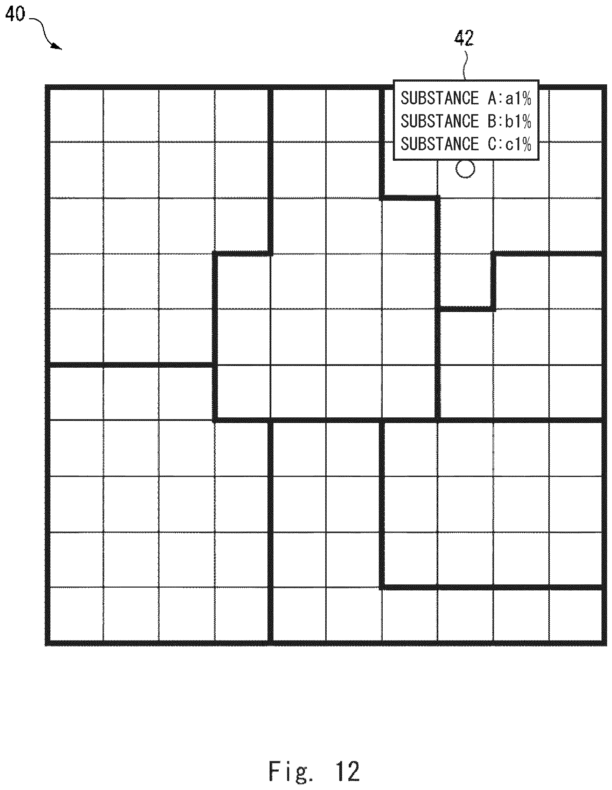

The target indication 42 may not be a simple mark for specifying the node, but may include other information. For example, the target indication 42 may include the material specification represented by the corresponding node. Fig. 12 shows an example of a case where the material specification is indicated by a target indication 42. In Fig. 12, the target indication 42 shows blending ratios of physical properties A, B and C.

Note that as described above, in some cases, a value indicated by a specification vector is a value that is obtained by converting a value of a parameter of the material specification with a method such as normalization. In such a case, it is preferred that a value included in the target indication 42 is not the value itself indicated by the specification vector, but a value that is obtained by converting the value indicated by the specification vector into a value of a parameter of the material specification.

<Output of Map Image 40>

The map image generation apparatus 2000 outputs the generated map image 40. How to output the map image 40 is arbitrarily determined. For example, the map image generation apparatus 2000 puts the map image 40 in an arbitrary storage device accessible from the map image generation apparatus 2000. Alternatively, for example, the map image generation apparatus 2000 displays the map image 40 on an arbitrary display device controllable from the map image generation apparatus 2000. Alternatively, for example, the map image generation apparatus 2000 transmits the map image 40 to an arbitrary apparatus that is connected to the map image generation apparatus 2000 so that they can communicate with each other.

When the map image 40 is displayed on a display device, its screen preferably has a function of also displaying information about each node. The information about each node is, for example, the physical property vector or the specification vector assigned to the node. For example, information about a certain node is displayed in response to the selection of that node by the user (e.g., when a mouse pointer is placed over the node). Note that in the case where the value of the physical property vector or the specification vector assigned to a node is one that is obtained by a conversion such as normalization, it is preferred to return the value to the parameter value of the physical property quantity or the material specification by performing a reverse conversion and then display the obtained value on the screen.

Although the present invention is described above with reference to example embodiments, the present invention is not limited to the above-described example embodiments. Various modifications that can be understood by those skilled in the art can be made to the configuration and details of the present invention within the scope of the invention.

Note that, in the above-described examples, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM, CD-R, CD-R/W, and semiconductor memories (such as mask ROM, PROM (Programmable ROM), EPROM (Erasable PROM), flash ROM, RAM, etc.). Further, the program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The whole or part of the example embodiments disclosed above can be described as, but not limited to, the following supplementary notes.

(Supplementary note 1)

A map image generation apparatus comprising:

acquisition means for acquiring, for each of a plurality of materials of various patterns that can be used in a target process, material specification information representing material specifications of the material and physical property information indicating, for each of a plurality of physical properties of a product that can be generated in the target process by using the material, a physical property quantity of the physical property;

self-organizing map generation means for generating, by using the physical property information, a self-organizing map on which, for each of nodes, a position in a map space and a physical property vector indicating, for each of a plurality of types of physical properties of the product, a value related to a physical property quantity of the physical property are assigned to the node; and

map image generation means for generating a map image showing each of the nodes arranged in the map space., wherein the map image generation means:

assigns, for each of the nodes, a specification vector indicating a value related to material specifications to the node by using the material specification information, and

performs, for each of the nodes, one or both of clustering and coloring of the node in the map image based on the assignment of the specification vector to the node.

(Supplementary note 2)

The map image generation apparatus described in Supplementary note 1, wherein the map image generation means:

specifies, for each of the plurality of pieces of material specification information, the node to which the physical property vector that is most similar to the physical property vector obtained from the physical property information corresponding to the material specification information is assigned; and

calculates specification vectors to be assigned to nodes other than the specified nodes by performing an interpolation process based on an arrangement of the specified nodes in the map space and the specification vectors assigned to the specified nodes.

(Supplementary note 3)

The map image generation apparatus described in Supplementary note 1 or 2, wherein the map image generation means:

performs clustering of the nodes based on the assignments of the specification vectors to the respective nodes, and

includes, into the map image, an indication by which clusters can be distinguished from each other.

(Supplementary note 4)

The map image generation apparatus described in any one of Supplementary notes 1 to 3, wherein

in the map image, a color of each of the nodes is determined by a magnitude of a component of at least one base color constituting the color, and the map image generation means determines a magnitude of a component of each of the base colors of the color assigned to the node by using a value that the specification vector assigned to the node indicates for a parameter corresponding to the base color.

(Supplementary note 5)

The map image generation apparatus described in any one of Supplementary notes 1 to 4, wherein the map image generation means:

acquires target information representing a desired physical property of the product; and

includes, into the map image, a target indication by which the node to which a physical property vector that is most similar to the physical property vector obtained from the target information is assigned can be identified.

(Supplementary note 6)

The map image generation apparatus described in Supplementary note 5, wherein the map image generation means includes, into the target indication, material specifications represented by the specification vector assigned to the node corresponding to target indication.

(Supplementary note 7)

A control method performed by a computer, comprising:

an acquisition step of acquiring, for each of a plurality of materials of various patterns that can be used in a target process, material specification information representing material specifications of the material and physical property information indicating, for each of a plurality of physical properties of a product that can be generated in the target process by using the material, a physical property quantity of the physical property;

a self-organizing map generation step of generating, by using the physical property information, a self-organizing map on which, for each of nodes, a position in a map space and a physical property vector indicating, for each of a plurality of types of physical properties of the product, a value related to a physical property quantity of the physical property are assigned to the node; and

a map image generation step of generating a map image showing each of the nodes arranged in the map space, wherein

in the map image generation step,

for each of the nodes, a specification vector indicating a value related to material specifications is assigned to the node by using the material specification information, and

for each of the nodes, one or both of clustering and coloring of the node is performed in the map image based on the assignment of the specification vector to the node.

(Supplementary note 8)

The control method described in Supplementary note 7, wherein

in the map image generation step,
for each of the plurality of pieces of material specification information, the node to which the physical property vector that is most similar to the physical property vector obtained from the physical property information corresponding to the material specification information is assigned is specified, and specification vectors to be assigned to nodes other than the specified nodes is calculated by performing an interpolation process based on an arrangement of the specified nodes in the map space and the specification vectors assigned to the specified nodes.

(Supplementary note 9)

The control method described in Supplementary note 7 or 8, wherein

in the map image generation step,
clustering of the nodes is performed based on the assignments of the specification vectors to the respective nodes, and
an indication by which clusters can be distinguished from each other is included into the map image.

(Supplementary note 10)

The control method described in any one of Supplementary notes 7 to 9, wherein

in the map image, a color of each of the nodes is determined by a magnitude of a component of at least one base color constituting the color, and
in the map image generation step, a magnitude of a component of each of the base colors of the color assigned to the node is determined by using a value that the specification vector assigned to the node indicates for a parameter corresponding to the base color.

(Supplementary note 11)

The control method described in any one of Supplementary notes 7 to 10, wherein

in the map image generation step,
target information representing a desired physical property of the product is acquired, and
a target indication by which the node to which a physical property vector that is most similar to the physical property vector obtained from the target information is assigned can be identified is included into the map image.

(Supplementary note 12)

The control method described in Supplementary note 11, wherein in the map image generation step, material specifications represented by the specification vector assigned to the node corresponding to target indication is included into the target indication.

(Supplementary note 13)

A non-transitory computer readable medium for causing a computer to perform:

an acquisition step of acquiring, for each of a plurality of materials of various patterns that can be used in a target process, material specification information representing material specifications of the material and physical property information indicating, for each of a plurality of physical properties of a product that can be generated in the target process by using the material, a physical property quantity of the physical property;
a self-organizing map generation step of generating, by using the physical property information, a self-organizing map on which, for each of nodes, a position in a map space and a physical property vector indicating, for each of a plurality of types of physical properties of the product, a value related to a physical property quantity of the physical property are assigned to the node; and
a map image generation step of generating a map image showing each of the nodes arranged in the map space, wherein
in the map image generation step,
for each of the nodes, a specification vector indicating a value related to material specifications is assigned to the node by using the material specification information, and
for each of the nodes, one or both of clustering and coloring of the node is performed in the map image based on the assignment of the specification vector to the node.

(Supplementary note 14)

The non-transitory computer readable medium described in Supplementary note 13, wherein

in the map image generation step,
for each of the plurality of pieces of material specification information, the node to which the physical property vector that is most similar to the physical property vector obtained from the physical property information corresponding to the material specification information is assigned is specified, and specification vectors to be assigned to nodes other than the specified nodes is calculated by performing an interpolation process based on an arrangement of the specified nodes in the map space and the specification vectors assigned to the specified nodes.

(Supplementary note 15)

The non-transitory computer readable medium described in Supplementary note 13 or 14, wherein

in the map image generation step,
clustering of the nodes is performed based on the assignments of the specification vectors to the respective nodes, and
an indication by which clusters can be distinguished from each other is included into the map image.

(Supplementary note 16)

The non-transitory computer readable medium described in any one of Supplementary notes 13 to 15, wherein

in the map image, a color of each of the nodes is determined by a magnitude of a component of at least one base color constituting the color, and
in the map image generation step, a magnitude of a component of each of the base colors of the color assigned to the node is determined by using a value that the specification vector assigned to the node indicates for the parameter corresponding to the base color.

(Supplementary note 17)

The non-transitory computer readable medium described in any one of Supplementary notes 13 to 16, wherein

in the map image generation step,
target information representing a desired physical property of the product is acquired, and
a target indication by which the node to which a physical property vector that is most similar to the physical property vector obtained from the target information is assigned can be identified is included into the map image.

(Supplementary note 18)

The non-transitory computer readable medium described in Supplementary note 17, wherein in the map image generation step, material specifications represented by the specification vector assigned to the node corresponding to target indication is included into the target indication.

This application is based upon and claims the benefit of priority from Japanese patent application No. 2021-044486, filed on March 18, 2021, the disclosure of which is incorporated herein in its entirety by reference.

**Reference Signs List**

| | |
|---|---|
| 10 | MATERIAL SPECIFICATION INFORMATION |
| 20 | PHYSICAL PROPERTY INFORMATION |
| 30 | SELF-ORGANIZING MAP |
| 40 | MAP IMAGE |
| 42 | TARGET INDICATION |
| 60 | MATERIAL |
| 70 | PRODUCT |
| 100 | TABLE |
| 102 | MATERIAL IDENTIFICATION INFORMATION |
| 104 | MATERIAL SPECIFICATION |
| 200 | TABLE |
| 202 | PRODUCT IDENTIFICATION INFORMATION |
| 204 | PHYSICAL PROPERTY |
| 300 | TABLE |
| 302 | POSITION |
| 304 | PHYSICAL PROPERTY VECTOR |
| 306 | MATERIAL IDENTIFICATION INFORMATION |
| 308 | SPECIFICATION VECTOR |
| 500 | COMPUTER |
| 502 | BUS |
| 504 | PROCESSOR |
| 506 | MEMORY |
| 508 | STORAGE DEVICE |
| 510 | INPUT/OUTPUT INTERFACE |
| 512 | NETWORK INTERFACE |
| 2000 | MAP IMAGE GENERATION APPARATUS |
| 2020 | ACQUISITION UNIT |
| 2040 | SELF-ORGANIZING MAP GENERATION UNIT |
| 2060 | MAP IMAGE GENERATION UNIT |

**Claims**

1. A map image generation apparatus comprising:

acquisition means for acquiring, for each of a plurality of patterns of a material that can be used in a target process, material specification information representing a material specification of the material and physical property information indicating a physical property quantity for each of a plurality of physical properties of a product that can be generated in the target process by using the material;
self-organizing map generation means for generating, by using the physical property information, a self-organizing map on which each node is assigned a position in a map space and a physical property vector indicating a value related to a physical property quantity for each of a plurality of types of the physical properties of the product; and

map image generation means for generating a map image showing each of the nodes arranged in the map space,

wherein the map image generation means performs:

assigning each of the nodes a specification vector indicating values related to the material specification by using the material specification information; and

performing clustering, coloring, or both for each of the nodes in the map image based on an assignment of the specification vectors to the nodes.

2. The map image generation apparatus according to claim 1,

wherein the map image generation means performs:

determining, for each of a plurality of pieces of the material specification information, the node to which the physical property vector that is most similar to the physical property vector obtained from the physical property information corresponding to the material specification information is assigned; and

computing specification vectors to be assigned to nodes other than the determined nodes by performing an interpolation process based on an arrangement of the determined nodes in the map space and the specification vectors assigned to the determined nodes.

3. The map image generation apparatus according to claim 1 or 2,

wherein the map image generation means performs:

performing the clustering of the nodes based on the assignment of the specification vectors to the respective nodes; and

including an indication by which clusters can be distinguished from each other into the map image.

4. The map image generation apparatus according to any one of claims 1 to 3,

wherein in the map image, a color of each of the nodes is determined based on a magnitude of a component of at least one base color constituting the color, and

wherein the map image generation means determines the magnitude of the component of each of the base colors of the color assigned to the node by using a value that the specification vector assigned to the node indicates for a parameter corresponding to the base color.

5. The map image generation apparatus according to any one of claims 1 to 4,

wherein the map image generation means performs:

acquiring target information representing a desired physical property of the product; and

including, into the map image, a target indication by which the node to which a physical property vector that is most similar to the physical property vector obtained from the target information is assigned can be identified.

6. The map image generation apparatus according to claim 5,

wherein the map image generation means includes, into the target indication, the material specification represented by the specification vector assigned to the node corresponding to the target indication.

7. A control method performed by a computer, comprising:

an acquisition step of acquiring, for each of a plurality of patterns of a material that can be used in a target process, material specification information representing a material specification of the material and physical property information indicating a physical property quantity for each of a plurality of physical properties of a product that can be generated in the target process by using the material;

a self-organizing map generation step of generating, by using the physical property information, a self-organizing map on which each node is assigned a position in a map space and a physical property vector indicating a value related to a physical property quantity for each of a plurality of types of the physical properties of the product; and

a map image generation step of generating a map image showing each of the nodes arranged in the map space,

wherein in the map image generation step:

assigning each of the nodes a specification vector indicating values related to the material specification by using the material specification information; and

performing clustering, coloring or both for each of the nodes in the map image based on an assignment of the specification vectors to the nodes.

8. The control method according to claim 7, wherein in the map image generation step:

   determining, for each of a plurality of pieces of the material specification information, the node to which the physical property vector that is most similar to the physical property vector obtained from the physical property information corresponding to the material specification information is assigned; and
   computing specification vectors to be assigned to nodes other than the determined nodes by performing an interpolation process based on an arrangement of the determined nodes in the map space and the specification vectors assigned to the determined nodes.

9. The control method according to claim 7 or 8, wherein in the map image generation step:

   performing the clustering of the nodes based on the assignment of the specification vectors to the respective nodes; and
   including an indication by which clusters can be distinguished from each other into the map image.

10. The control method according to any one of claims 7 to 9,

    wherein in the map image, a color of each of the nodes is determined based on a magnitude of a component of at least one base color constituting the color, and
    wherein in the map image generation step, determining the magnitude of the component of each of the base colors of the color assigned to the node by using a value that the specification vector assigned to the node indicates for a parameter corresponding to the base color.

11. The control method according to any one of claims 7 to 10,
    wherein in the map image generation step:

    acquiring target information representing a desired physical property of the product; and
    including, into the map image, a target indication by which the node to which a physical property vector that is most similar to the physical property vector obtained from the target information is assigned can be identified.

12. The control method according to claim 11, wherein in the map image generation step, including the material specification represented by the specification vector assigned to the node corresponding to target indication into the target indication.

13. A non-transitory computer readable medium for causing a computer to execute:

    an acquisition step of acquiring, for each of a plurality of patterns of a material that can be used in a target process, material specification information representing a material specification of the material and physical property information indicating a physical property quantity for each of a plurality of physical properties of a product that can be generated in the target process by using the material;
    a self-organizing map generation step of generating, by using the physical property information, a self-organizing map on which each of node is assigned a position in a map space and a physical property vector indicating a value related to a physical property quantity for each of a plurality of types of physical properties of the product; and
    a map image generation step of generating a map image showing each of the nodes arranged in the map space,
    wherein in the map image generation step:

       assigning each of the nodes a specification vector indicating values related to the material specification by using the material specification information; and
       performing clustering, coloring, or both for each of the nodes in the map image based on an assignment of the specification vectors to the nodes.

14. The non-transitory computer readable medium according to claim 13,
    wherein in the map image generation step:

    determining, for each of a plurality of pieces of the material specification information, the node to which the physical property vector that is most similar to the physical property vector obtained from the physical property information corresponding to the material specification information is assigned; and
    computing specification vectors to be assigned to nodes other than the determined nodes by performing an interpolation process based on an arrangement of the determined nodes in the map space and the specification vectors assigned to the determined nodes.

15. The non-transitory computer readable medium according to claim 13 or 14,
    wherein in the map image generation step:

       performing the clustering of the nodes based on the assignment of the specification vectors to the respective nodes; and
including an indication by which clusters can be distinguished from each other into the map image.

16. The non-transitory computer readable medium according to any one of claims 13 to 15,

wherein in the map image, a color of each of the nodes is determined based on a magnitude of a component of at least one base color constituting the color, and
wherein in the map image generation step, determining the magnitude of the component of each of the base colors of the color assigned to the node by using a value that the specification vector assigned to the node indicates for the parameter corresponding to the base color.

17. The non-transitory computer readable medium according to any one of claims 13 to 16,
wherein in the map image generation step:

acquiring target information representing a desired physical property of the product; and
including, into the map image, a target indication by which the node to which a physical property vector that is most similar to the physical property vector obtained from the target information is assigned can be identified.

18. The non-transitory computer readable medium according to claim 17,
wherein in the map image generation step, including the material specification represented by the specification vector assigned to the node corresponding to target indication into the target indication.

60

```
┌──────────┐      ┌─────────────────────┐      ┌──────────┐
│ MATERIAL │─────▶│ GENERATION PROCESS IN│─────▶│  PRODUCT │
│          │      │   TARGET PROCESS     │      │          │
└──────────┘      └─────────────────────┘      └──────────┘
```

70

┌──────────────────┐
│     MATERIAL     │
│  SPECIFICATION   │───10
│   INFORMATION    │
└──────────────────┘

20───┌──────────────────┐
     │ PHYSICAL PROPERTY │
     │    INFORMATION    │
     └──────────────────┘

10

20

┌──────────────────┐        ┌──────────────────┐
│     MATERIAL     │        │ PHYSICAL PROPERTY │
│  SPECIFICATION   │········│    INFORMATION    │
│   INFORMATION    │        │                   │
└──────────────────┘        └──────────────────┘

2000

MAP IMAGE GENERATION APPARATUS

┌─────────────────────────────────────────────────────────┐
│ GENERATE SELF-ORGANIZING MAP 30 SHOWING DISTRIBUTION OF  │
│ PHYSICAL PROPERTIES OF PRODUCT 70 BY USING PHYSICAL      │
│ PROPERTY INFORMATION 20                                  │
└─────────────────────────────────────────────────────────┘

┌──────────────────────┐
│ SELF-ORGANIZING MAP  │───30
└──────────────────────┘

┌─────────────────────────────────────────────────────────┐
│ GENERATE MAP IMAGE 40 REPRESENTING                       │
│ RELATIONSHIP BETWEEN DISTRIBUTION OF MATERIAL            │
│ SPECIFICATIONS AND DISTRIBUTION OF PHYSICAL PROPERTIES   │
│ OF PRODUCT 70 BY USING MATERIAL SPECIFICATION            │
│ INFORMATION 10 AND SELF-ORGANIZING MAP 30                │
└─────────────────────────────────────────────────────────┘

┌──────────────────┐
│    MAP IMAGE     │───40
└──────────────────┘

Fig. 1

2000

MAP IMAGE GENERATION APPARATUS

2020

ACQUISITION UNIT

2040

SELF-ORGANIZING MAP
GENERATION UNIT

2060

MAP IMAGE GENERATION
UNIT

Fig. 2

500

COMPUTER

506

510

502

MEMORY

INPUT/OUTPUT
INTERFACE

BUS

PROCESSOR

STORAGE
DEVICE

NETWORK INTERFACE

504

508

512

Fig. 3

start

ACQUIRE MATERIAL SPECIFICATION INFORMATION 10 AND PHYSICAL PROPERTY INFORMATION 20 — S102

GENERATE SELF-ORGANIZING MAP 30 BY USING PHYSICAL PROPERTY INFORMATION 20 — S104

ASSIGN SPECIFICATION VECTOR TO EACH NODE ON SELF-ORGANIZING MAP 30 BY USING MATERIAL SPECIFICATION INFORMATION — S106

GENERATE PHYSICAL PROPERTY MAP IMAGE 40 FROM SELF-ORGANIZING MAP 30 BASED ON ASSIGNMENTS OF SPECIFICATION VECTORS TO RESPECTIVE NODES — S106

end

Fig. 4

100

| MATERIAL IDENTIFICATION INFORMATION | MATERIAL SPECIFICATION |
|---|---|
| A101 | SUBSTANCE A : a1%, SUBSTANCE B : b1%, · · · |
| A102 | SUBSTANCE A : a2%, SUBSTANCE B : b2%, · · · |
| · · · | · · · |

Fig. 5

200

| PRODUCT IDENTIFICATION INFORMATION | PHYSICAL PROPERTY |
|---|---|
| X101 | INCOMBUSTIBILITY : a1, HEAT RESISTANCE : b1, ELASTIC MODULUS : c1, TENACITY : d1 |
| X102 | INCOMBUSTIBILITY : a2, HEAT RESISTANCE : b2, ELASTIC MODULUS : c2, TENACITY : d2 |
| · · · | · · · |

Fig. 6

300

| POSITION | PHYSICAL PROPERTY VECTOR | MATERIAL IDENTIFICATION INFORMATION | SPECIFICATION VECTOR |
|---|---|---|---|
| (1, 1) | (a11, b11, c11, d11) | – | (x11, y11, z11) |
| (1, 2) | (a12, b12, c12, d12) | A101 | (x12, y12, z12) |
| (1, 3) | (a13, b13, c13, d13) | – | (x13, y13, z13) |
| ... | ... | ... | ... |

302     304     306     308

Fig. 7

40

Fig. 8

start

LOOP PROCESS L1 FOR EACH NODE i ~S202

LOOP PROCESS L2 FOR EACH j-th
SPECIFICATION PARAMETER ~S204

DETERMINE MAGNITUDE OF COMPONENT OF j-th BASE COLOR
BASED ON VALUE THAT SPECIFICATION VECTOR OF
NODE i INDICATES FOR j-th SPECIFICATION PARAMETER ~S206

LOOP PROCESS L2 ~S208

ASSIGN COLOR SPECIFIED BY DETERMINED MAGNITUDE OF
COMPONENT OF EACH BASE COLOR TO NODE i ~S210

LOOP PROCESS L1 ~S212

end

Fig. 9

40

Fig. 10

Fig. 11

40

42

SUBSTANCE A:a1%
SUBSTANCE B:b1%
SUBSTANCE C:c1%

Fig. 12

## INTERNATIONAL SEARCH REPORT

International application No.

**PCT/JP2022/005624**

### A. CLASSIFICATION OF SUBJECT MATTER

*G06F 30/10*(2020.01)i; *G06F 30/27*(2020.01)i
FI:  G06F30/27; G06F30/10

According to International Patent Classification (IPC) or to both national classification and IPC

### B. FIELDS SEARCHED

Minimum documentation searched (classification system followed by classification symbols)

G06F30/10; G06F30/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); IEEE Xplore

### C. DOCUMENTS CONSIDERED TO BE RELEVANT

| Category* | Citation of document, with indication, where appropriate, of the relevant passages | Relevant to claim No. |
|---|---|---|
| Y | JP 2008-293315 A (THE YOKOHAMA RUBBER CO., LTD.) 04 December 2008 (2008-12-04)<br>paragraphs [0020], [0024], [0027], [0033], [0035]-[0045], fig. 1, 2 | 1-18 |
| Y | WO 2006/121057 A1 (KYOTO UNIV.) 16 November 2006 (2006-11-16)<br>paragraphs [0059], [0131], [0148] | 1-18 |
| Y | JP 2014-26459 A (SHIZUOKA PREF.) 06 February 2014 (2014-02-06)<br>paragraphs [0055]-[0057] | 5-6, 11-12, 17-18 |

☐ Further documents are listed in the continuation of Box C.　　☑ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **19 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/005624**

| Patent document cited in search report | | | Publication date (day/month/year) | Patent family member(s) | Publication date (day/month/year) |
|---|---|---|---|---|---|
| JP | 2008-293315 | A | 04 December 2008 | (Family: none) | |
| WO | 2006/121057 | A1 | 16 November 2006 | (Family: none) | |
| JP | 2014-26459 | A | 06 February 2014 | (Family: none) | |

Form PCT/ISA/210 (patent family annex) (January 2015)

## REFERENCES CITED IN THE DESCRIPTION

### Patent documents cited in the description

- JP 2016148988 A
- JP 2021044486 A